# EUROPÄISCHE PATENTSCHRIFT

(11) **EP 1 599 693 B1**
(45) Veröffentlichungstag und Bekanntmachung des Hinweises auf die Patenterteilung: **03.01.2007**
(21) Anmeldenummer: 04707199.8
(22) Anmeldetag: 02.02.2004
(51) Int. Cl.: F16P 3/14

(54) **SICHERUNGSVERFAHREN UND OPTOELEKTRONISCHER SENSOR**
SAFETY METHOD AND OPTOELECTRONIC SENSOR
PROCEDE DE SECURITE ET DETECTEUR OPTO-ELECTRONIQUE

(30) Priorität: 04.03.2003 DE 10309399
(43) Veröffentlichungstag der Anmeldung: 30.11.2005
(73) Patentinhaber: SICK AG, 79183 Waldkirch (DE)
(72) Erfinder: BRAUNE, Ingolf, 79194 Gundelfingen (DE); BERGBACH, Roland, 79312 Emmendingen (DE)
(74) Vertreter: Manitz, Finsterwald & Partner GbR
(86) Internationale Anmeldenummer: PCT/EP2004/000926
(87) Internationale Veröffentlichungsnummer: WO 2004/079255

(56) Entgegenhaltungen:
- WO-A-00/67932
- US-A1- 2003 024 421

## Beschreibung

Die Erfindung betrifft ein Verfahren zur Sicherung einer Werkzeugmaschine mit einem ersten Werkzeugteil, das Arbeitsbewegungen in Richtung eines zweiten Werkzeugteils ausführt, so dass im Verlauf dieser Arbeitsbewegungen ein Öffnungsspalt zwischen dem ersten Werkzeugteil einerseits und dem zweiten Werkzeugteil oder einem zu bearbeitenden Werkstück andererseits allmählich geschlossen wird, gemäß dem Oberbegriff des Anspruchs 1. Dabei überwacht ein optoelektronischer Sensor ein volumenförmiges Schutzfeld zwischen den Werkzeugteilen, indem entlang des Öffnungsspalts zwischen den Werkzeugteilen wenigstens ein Lichtstrahl mittels einer Sendeeinrichtung ausgesandt und mittels einer Empfangseinrichtung detektiert wird. Wenn der Sensor eine Unterbrechung des Lichtstrahls detektiert, wird ein Abschaltvorgang zum Anhalten des ersten Werkzeugteils ausgelöst, um eine mögliche Verletzung einer Bedienperson der Werkzeugmaschine zu verhindern.

Die Erfindung betrifft ferner einen entsprechend konfigurierten optoelektronischen Sensor gemäß dem Oberbegriff des Anspruchs 17.

Bei der genannten Werkzeugmaschine handelt es sich typischerweise um eine Gesenkpresse zum Biegen, Abkanten, Schneiden oder Stanzen von Werkstücken, wie Blechteilen. Das genannte erste Werkzeugteil ist in diesem Fall durch ein Oberwerkzeug gebildet, das eine längliche Biegelinie oder Schnittkante besitzt. Dieses Oberwerkzeug wird während seiner Arbeitsbewegung vertikal nach unten gegen ein Unterwerkzeug bewegt, das als zweites Werkzeugteil dient und an dem das Werkstück anliegt oder aufliegt.

Für jeden Bearbeitungsvorgang muss zunächst das zuvor bearbeitete Werkstück entnommen und das neu zu bearbeitende Werkstück in den Öffnungsspalt zwischen den Werkzeugteilen eingeführt werden. Dies erfolgt manuell durch eine Bedienperson. Um während des Schließens des Öffnungsspalts eine Verletzung insbesondere der Hände der Bedienperson zu vermeiden, überwacht der optoelektronische Sensor ein Schutzfeld, das sich im Falle einer Gesenkpresse typischerweise unterhalb des bewegten Oberwerkzeugs erstreckt. Dieses Schutzfeld ist volumenförmig, d.h. zumindest sein Umriss erstreckt sich entlang eines zweidimensionalen Querschnitts, so dass der Sensor auf Eingriffe aus verschiedenen Richtungen schnell und zuverlässig reagieren kann.

Eine derartige Sicherung von Werkzeugmaschinen hat sich bewährt, um die erläuterte Verletzungsgefahr zu verringern. Andererseits besteht natürlich die Bemühung, dass die Arbeitsbewegungen des ersten Werkzeugsteils möglichst schnell ausgeführt werden können, so dass die Werkzeugmaschine mit einem hohen Arbeitstakt arbeiten kann. Ein erhöhter Arbeitstakt steht jedoch in einem gewissen Konflikt zu der Überwachung eines großen Schutzfeldes, da bei einem großen Schutzfeld an sich ungefährliche Justierungen des Werkstücks durch die Bedienperson bereits zu einem unerwünschten Abschaltvorgang führen können.

Wenn aufgrund dieser Überlegungen die Ausdehnung des vom Sensor überwachten Schutzfelds bezüglich der Richtung der Arbeitsbewegung des ersten Werkzeugteils wiederum verringert wird, so besteht das weitere Problem, dass mögliche Schwingungen der Werkzeugmaschine dazu führen können, dass der ausgesandte Lichtstrahl die Empfangseinrichtung nicht mehr planmäßig beaufschlagt oder von einem Werkzeugteil unterbrochen wird, und dass es deshalb ebenfalls zu unerwünschten Abschaltvorgängen kommt.

Die WO 00/67932 beschreibt beispielsweise ein Pressensicherungssystem mit einem optoelektronischen Sensor, dessen Sendeeinrichtung einen Laserstrahl aussendet, der sich entlang einer horizontalen Ebene erstreckt. Empfangsseitig ist eine zylindrische Linse vorgesehen. Diese soll eine Justierung des ebenen Laserstrahls erleichtern und den Sensor unempfindlich gegenüber vertikalen Vibrationen machen. Dieses Sicherungssystem hat jedoch den Nachteil, dass die Gefahr von Fehlabschaltungen aufgrund von vertikalen Vibrationen nur eingeschränkt beseitigt wird und in vertikaler Richtung auch nur ein vergleichsweise geringer Schutzbereich zur Verfügung steht.

Aus der US 2003/0024421 A1 ist ein Verfahren zur Steuerung eines Lichtgitters bekannt, bei dem ein geschlossener Teilbereich eines Überwachungsbereichs als ein aktives Feld aktiviert wird und dieses aktive Feld innerhalb des Überwachungsbereichs derartig bewegt wird, dass der Gefahrenbereich während einer Werkzeugbewegung zunächst lediglich teilweise gesichert ist.

Es ist eine Aufgabe der Erfindung, ein Sicherungsverfahren und einen entsprechend konfigurierten Sensor zu schaffen, die für eine Werkzeugmaschine schnelle Arbeitsbewegungen erlauben, wobei der Öffnungsspalt zwischen den Werkzeugteilen hinreichend gesichert wird und Vibrationen in Richtung der Arbeitsbewegung, insbesondere in Vertikalrichtung, nicht leicht zu Fehlabschaltungen führen.

Diese Aufgabe wird durch ein Verfahren bzw. einen Sensor mit den Merkmalen der Ansprüche 1 und 17 gelöst, und insbesondere dadurch, dass
- bei weiterhin andauernder Arbeitsbewegung die Schutzfeldausdehnung beibehalten wird und das Schutzfeld in der Mitte des Öffnungsspalts gehalten wird, und
- der Sensor schließlich deaktiviert wird.

Somit ist der folgende Ablauf vorgesehen:

Zu Beginn einer Arbeitsbewegung wird innerhalb des Öffnungsspalts zwischen den Werkzeugteilen ein Schutzfeld überwacht, dessen Ausdehnung parallel zur Richtung der Arbeitsbewegung geringer ist als die entsprechende Ausdehnung (lichte Höhe) des Öffnungsspalts. Dadurch ist eine ausreichende Unempfindlichkeit gegenüber möglichen Vibrationen des Sensors parallel zur Arbeitsbewegung gewährleistet. Das Schutzfeld kann nämlich aufgrund seiner geringeren Ausdehnung von beiden den Werkzeugteilen soweit beabstandet angeordnet sein, dass im Falle der erläuterten Vibrationen keines der Werkzeugteile den Lichtstrahl unterbricht und somit einen unerwünschten Abschaltvorgang auslöst.

Während der nun andauernden Arbeitsbewegung des ersten Werkzeugs folgt das Schutzfeld zunächst dieser Arbeitsbewegung und verringert kontinuierlich seine Ausdehnung parallel zu der Richtung der Arbeitsbewegung, wobei das überwachte Schutzfeld wiederum in der Mitte des Öffnungsspalts zwischen den Werkzeugteilen gehalten wird. Somit ist auch während dieses Schritts gewährleistet, dass bei starken Vibrationen parallel zu der Arbeitsbewegung keines der Werkzeugteile den Lichtstrahl unbeabsichtigt unterbricht. Hierfür ist es von Vorteil, wenn das Schutzfeld derart in der Mitte des Öffnungsspalts gehalten wird, dass es zu dem ersten Werkzeugteil einerseits und zu dem zweiten Werkzeugteil oder dem zu bearbeitenden Werkstück andererseits stets einen vorbestimmten Mindestabstand einnimmt.

Schließlich wird, beispielsweise wenn der Öffnungsspalt zwischen den Werkzeugteilen eine vorbestimmte minimale Ausdehnung erreicht hat, der Sensor vollständig deaktiviert (so genanntes "Muting"). Dies bedeutet, dass ab diesem Zeitpunkt der Sensor kein Schutzfeld mehr überwacht und demzufolge auch dann kein Abschaltvorgang mehr ausgelöst wird, wenn die Empfangseinrichtung des Sensors kein Empfangssignal mehr liefert.

Es ist wichtig, dass nach dem erläuterten kontinuierlichen Verringern der Schutzfeldausdehnung, jedoch noch vor der Deaktivierung des Sensors, die Ausdehnung des Schutzfelds parallel zu der Richtung der Arbeitsbewegung zeitweise beibehalten wird und das Schutzfeld in der Mitte des Öffnungsspalts zwischen den Werkzeugteilen gehalten wird, während die Arbeitsbewegung des ersten Werkzeugteils weiterhin andauert. Dadurch kann der Sensor nämlich in einem letzten Überwachungsschritt vor der Deaktivierung einen Teil des Öffnungsspalts immer noch mit einem minimalen Schutzfeld überwachen. Gleichzeitig ist weiterhin die erwünschte Unempfindlichkeit gegenüber Vibrationen parallel zu der Arbeitsbewegung gewährleistet, da dieses minimale Schutzfeld immer noch in der Mitte des Öffnungsspalts gehalten wird.

Diese minimale Überwachung in einer letzten Phase vor der endgültigen Deaktivierung des Sensors bewirkt, dass die Arbeitsbewegung des ersten Werkzeugteils auch zu diesem Zeitpunkt noch mit der anfänglichen, schnellen Schließbewegung der Werkzeugmaschine erfolgen kann. Ein Umschalten auf eine langsamere Schließgeschwindigkeit ist also nicht zwingend erforderlich. Somit ist eine durchgängig schnelle Schließbewegung möglich, und die Werkzeugmaschine kann mit einem hohen Arbeitstakt betrieben werden, ohne dass die Sicherheit der Bedienperson hierdurch eingeschränkt ist.

Demgegenüber ist die Anordnung, wie erläutert, bis zum endgültigen Deaktivieren des Sensors unempfindlich gegenüber Schwingungen, insbesondere gegenüber vertikalen Schwingungen im Falle einer Gesenkpresse. Zusammenfassend sieht die Erfindung somit eine Dynamisierung des Schutzfeldes in Abhängigkeit von dem Öffnungsspalt der Werkzeugmaschine vor, wobei zur Erzielung einer hohen Unempfindlichkeit gegenüber Vibrationen das Schutzfeld in der Mitte des verbleibenden Öffnungsspalts - insbesondere in symmetrischer Anordnung - justiert wird.

Gemäß einer Weiterbildung der Erfindung kann für den Betrieb der Werkzeugmaschine wahlweise ein Normalmodus oder ein Kastenmodus eingestellt werden, wobei in dem Normalmodus das Schutzfeld sich bezüglich der Bewegungsebene des ersten Werkzeugteils entlang eines Vorderraums und eines Rückraums erstreckt. In dem Kastenmodus dagegen löst eine Unterbrechung des Lichtstrahls nur dann einen Abschaltvorgang aus, falls diese Unterbrechung sowohl innerhalb des Vorderraums als auch des Rückraums erfolgt. Dadurch ist auch das Bearbeiten von kastenförmigen Bergstücken, die zwangsläufig teilweise in das Schutzfeld hineinragen, mit hinreichender Sicherheit und hoher Effizienz möglich.

Gemäß einer alternativen oder zusätzlichen Weiterbildung der Erfindung kann für den Betrieb der Werkzeugmaschine wahlweise ein Normalmodus oder ein Anschlagmodus eingestellt werden, wobei in dem Normalmodus das Schutzfeld sich bezüglich der Bewegungsebene des ersten Werkzeugteils entlang eines Vorderraums und eines Rückraums erstreckt. In dem Anschlagmodus hingegen wird das Schutzfeld innerhalb eines Teils des Vorderraums und/oder Rückraums gezielt ausgeblendet, so dass ein Werkstückanschlag in den ausgeblendeten Teil eindringen kann, ohne dass eine hierdurch verursachte Unterbrechung des Lichtstrahls einen Abschaltvorgang auslöst. Dadurch können beispielsweise für das Biegen kurzer Schenkel Anschlagelemente eingesetzt werden, die während der erläuterten Bewegung des Schutzfelds in dieses hineinragen, ohne dass es zu unerwünschten und unnötigen Betriebsunterbrechungen kommt.

Sowohl in dem Kastenmodus als auch in dem Anschlagmodus kann die Arbeitsbewegung des ersten Werkzeugteils also bis zum eigentlichen Bearbeitungsvorgang mit einer durchgehend hohen Schließgeschwindigkeit erfolgen.

Weitere Ausführungsformen der Erfindung sind in den Unteransprüchen genannt. Die Erfindung wird nachfolgend beispielhaft unter Bezugnahme auf die Zeichnungen erläutert.
- Fig. 1: zeigt eine schematische Frontansicht einer Gesenkbiegepresse;
- Fig. 2a-2f: zeigen jeweils eine schematische Seitenansicht von Teilen dieser Gesenkbiegepresse in unterschiedlichen Phasen eines normalen Bearbeitungsvorgangs;
- Fig. 3a-3c: zeigen jeweils eine schematische Seitenansicht von Teilen dieser Gesenkbiegepresse in verschiedenen Phasen einer Kastenbearbeitung; und
- Fig. 4a-4c: zeigen jeweils eine schematische Seitenansicht von Teilen dieser Gesenkbiegepresse in verschiedenen Phasen eines Bearbeitungsvorgangs in einem Anschlagmodus.

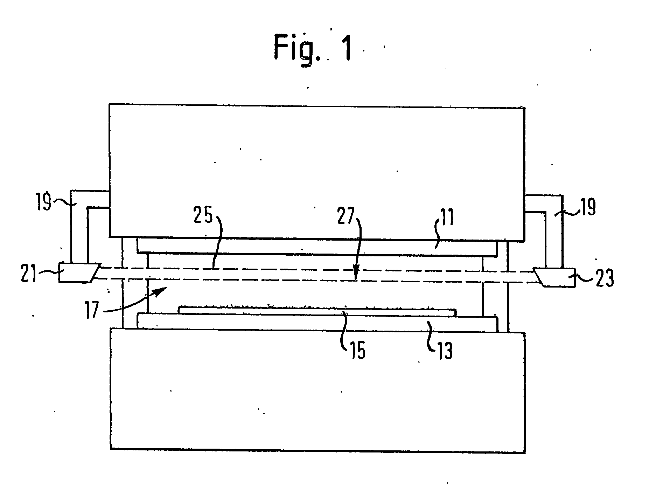

Die in Fig. 1 gezeigte Gesenkbiegepresse besitzt ein Oberwerkzeug 11, das zu einer Arbeitsbewegung vertikal nach unten gegen ein Unterwerkzeug 13 angetrieben werden kann, um ein auf dem Unterwerkzeug 13 aufliegendes Werkstück 15 zu biegen. Während dieser Arbeitsbewegung wird ein Öffnungsspalt 17 zwischen dem Oberwerkzeug 11 und dem Werkstück 15 allmählich geschlossen.

An den beiden Seiten des Oberwerkzeugs 11 ist jeweils ein Haltearm 19 vorgesehen. Die Haltearme 19 tragen eine Sendeeinrichtung 21 und eine ortsauflösende Empfangseinrichtung 23, die Teile eines optoelektronischen Sensors sind. Die Sendeeinrichtung 21 besitzt eine Laserdiode mit einer Sendeoptik (in den Figuren nicht gezeigt), die das Sendelicht der Laserdiode zu einem Lichtstrahl 25 aufweitet. Die Empfangseinrichtung 23 besitzt einen rechteckigen CMOS-Matrix-Empfänger, der von dem Lichtstrahl 25 beaufschlagt wird.

Der Lichtstrahl 25 durchquert den Öffnungsspalt 17 unterhalb des Oberwerkzeugs 11. Der Umriss des aktivierten Teils der Empfangseinrichtung 23 definiert innerhalb des Lichtstrahls 25 somit ein volumenförmiges Schutzfeld 27 zwischen dem Oberwerkzeug 11 und dem Unterwerkzeug 13, wie nachfolgend noch erläutert wird. Sobald eine Auswerte- und Steuereinrichtung des Sensors (in den Figuren nicht gezeigt) eine Unterbrechung des Lichtstrahls 25 innerhalb des Schutzfelds 27 detektiert, löst sie einen Abschaltvorgang zum Anhalten des Oberwerkzeugs 11 aus. Dadurch wird eine Bedienperson, die beispielsweise das Werkstück 15 in den Öffnungsspalt 17 einführt, vor Verletzungen durch das Oberwerkzeug 11 geschützt.

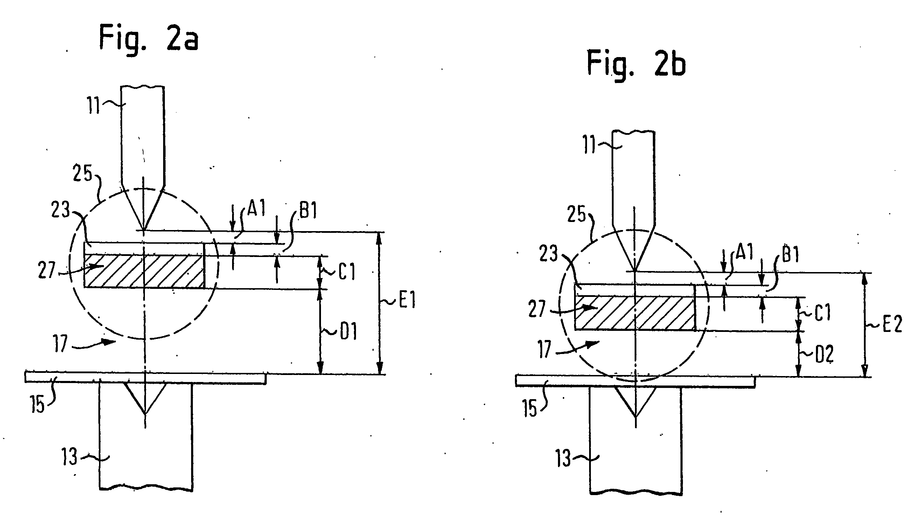

Nachfolgend wird anhand der Fig. 2a bis 2f die Funktionsweise der Gesenkbiegepresse gemäß Fig. 1 in einem Normalmodus erläutert.

Fig. 2a bis 2f zeigen jeweils das Oberwerkzeug 11, das Unterwerkzeug 13, das darauf aufliegende Werkstück 15, den im Querschnitt kreisrunden Lichtstrahl 25 sowie die hiervon vollständig beaufschlagte Empfangseinrichtung 23 in einer schematischen Seitenansicht. Von den einzelnen CMOS-Empfangselementen der Empfangseinrichtung 23 ist in Fig. 2a bis 2f jeweils ein unterschiedlicher Teil aktiviert. Nur diese aktivierten Empfangselemente werden also auf eine Unterbrechung des Lichtstrahls 25 überwacht, um gegebenenfalls einen Abschaltvorgang auszulösen. Die Anordnung dieser aktivierten Empfangselemente bestimmt dabei den Querschnitt des Schutzfelds 27. Somit befindet sich das tatsächlich überwachte Schutzfeld 27 - in den Figuren schraffiert eingezeichnet - innerhalb eines überwachbaren Beobachtungsfelds, dessen Querschnitt dem Umriss der Empfangseinrichtung 23 entspricht.

Ferner sind in den Figuren - jeweils mit unterschiedlichen Indizes für unterschiedliche Wertgrößen - die folgenden Abstände und Ausdehnungen bezeichnet:
A bezeichnet den lichten Abstand des Oberwerkzeugs 11 von der Empfangseinrichtung 23 in der Seitenansicht;
B bezeichnet die Vertikaiausdehnung des oberen deaktivierten Bereichs der Empfangseinrichtung 23;
C bezeichnet die Vertikalausdehnung des Schutzfelds 27;
D bezeichnet den Vertikalabstand zwischen dem Schutzfeld 27 und dem zu bearbeitenden Werkstück 15; und
E bezeichnet die Vertikalausdehnung des Öffnungsspalts 17.

Fig. 2a zeigt den Beginn einer Arbeitsbewegung des Oberwerkzeugs 11. Die Vertikalausdehnung C1 des Schutzfelds 27 ist deutlich geringer als die Vertikalausdehnung E1 des Öffnungsspalts 17. Insbesondere nimmt das Schutzfeld 27 zu dem Oberwerkzeug 11 einen Vertikalabstand A1+B1 ein, und zu dem Werkstück 15 einen Vertikalabstand D1. Beispielsweise können folgende Werte vorgesehen sein:
A1 = 2 mm
B1 = 5 mm
C1 = 9 mm

Aufgrund von Beschleunigungsvorgängen oder Abbremsvorgängen kann es zu vertikalen Schwingungen der an den Haltearmen 19 befestigten Sensorteile 21, 23 kommen. Dadurch können der Lichtstrahl 25 oder die Empfangseinrichtung 23 bezüglich der Seitenansicht gemäß Fig. 2a Vertikalbewegungen ausführen. Aus der Seitenansicht gemäß Fig. 2a ist jedoch ersichtlich, dass derartige Schwingungen nicht zu unerwünschten Fehlabschaltungen führen können. Zum einen ist der Lichtstrahl 25 nämlich ausreichend groß, um den Lichtempfänger 23 stets vollständig zu beaufschlagen. Zum anderen ist das Schutzfeld 27, wie erläutert, bezüglich der Unterkante des Oberwerkzeugs 11 ausreichend beabstandet, so dass das Oberwerkzeug 11 auch bei einer Schwingung der Anordnung nicht in das Schutzfeld 27 hineinragt.

In diesem Zusammenhang ist noch anzumerken, dass die Empfangseinrichtung 23 auch vollständig aktiviert sein kann, da auch der gezeigte Vertikalabstand A1 der Empfangseinrichtung 23 von dem Oberwerkzeug 11 ausreichen würde, um ein unerwünschtes Eindringen des Oberwerkzeugs 11 in das Schutzfeld 27 im Falle von Vertikalschwingungen zu verhindern.

Fig. 2b zeigt, wie das Schutzfeld 27 der Arbeitsbewegung des Oberwerkzeugs 11 zunächst folgt. Der lichte Abstand A1 zwischen dem Oberwerkzeug 11 und der Empfangseinrichtung 23 wird - außer im Falle der erläuterten Vertikalschwingungen - grundsätzlich beibehalten, da die Vertikaleinrichtung 23 über den Haltearm 19 mit dem Oberwerkzeug 11 fest verbunden ist (Fig. 1).

Die Vertikalausdehnung B1 des oberen deaktivierten Bereichs der Empfangseinrichtung 23 sowie die Vertikalausdehnung C1 des Schutzfelds 27 werden zunächst beibehalten. Dies ist jedoch nicht zwingend erforderlich.

Die Vertikalausdehnung E2 des Öffnungsspalts 17 und dementsprechend der Vertikalabstand D2 zwischen dem Schutzfeld 27 und dem Werkstück 15 verringern sich jedoch allmählich.

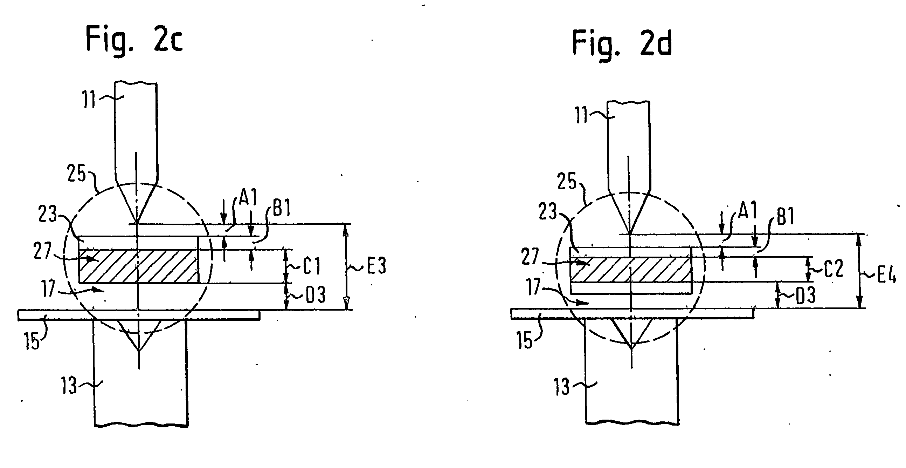

Auf diese Weise wird der in Fig. 2c gezeigte Zustand erreicht. Der Vertikalabstand D3 zwischen dem Schutzfeld 27 und dem Werkstück 15 ist nun auf einen vorbestimmten Wert verringert. Ausgehend von diesem Zustand wird nun bei andauernder Arbeitsbewegung des Oberwerkzeugs 11 die Vertikalausdehnung C1 des Schutzfelds 27 kontinuierlich verringert, und das Schutzfeld 27 wird in der Mitte des Öffnungsspalts 17 gehalten.

Es ist zu beachten, dass in dem Zustand gemäß Fig. 2c das Schutzfeld 27 genau symmetrisch in der Mitte zwischen dem Oberwerkzeug 11 und dem Werkstück 15 angeordnet ist. Der Vertikalabstand D3 zwischen dem Schutzfeld 27 und dem Werkstück 15 kann beispielsweise 7 mm betragen, während der lichte Abstand des A1+B1 des Schutzfelds 27 zu dem Oberwerkzeug 11 weiterhin ebenfalls 7 mm beträgt. Diese symmetrische Anordnung ist jedoch nicht zwingend erforderlich. Ausreichend für die erläuterte Vermeidung von Fehlabschaltungen aufgrund von Vertikalschwingungen ist eine mittige Anordnung des Schutzfelds 27, mit Mindestabständen nach oben und unten.

Ergänzend ist auch noch anzumerken, dass als Auslösekriterium für die nachfolgende kontinuierliche Verringerung der Vertikalausdehnung C1 des Schutzfelds 27 beispielsweise auch die Bedingung vorgesehen sein kann, dass der Öffnungsspalt 17 eine vorbestimmte Vertikalausdehnung E3 erreicht hat.

Fig. 2d zeigt das genannte nachfolgende kontinuierliche Verringern der Vertikalausdehnung C2 des Schutzfeids 27 bei andauernder Arbeitsbewegung des Oberwerkzeugs 11. Diese Verringerung der Schutzfeldausdehnung C2 erfolgt dadurch, dass nun der Vertikalabstand D3 zwischen dem Schutzfeld 27 und dem Werkstück 15 beibehalten wird. Hierfür werden Empfangselemente aus dem unteren Bereich der Empfangseinrichtung 23 sukzessive deaktiviert, d.h. für diese Empfangselemente erfolgt keine Überwachung mehr auf Unterbrechung des Lichtstrahls 25.

Auf diese Weise wird gleichzeitig erreicht, dass das Schutzfeld 27 weiterhin in der Mitte des Öffnungsspalts 17 gehalten wird. Dadurch bleibt gewährleistet, dass zwischen dem Schutzfeld 27 einerseits und dem Oberwerkzeug 11 und dem Werkstück 15 andererseits jeweils ein Mindestabstand A1+B1 bzw. D3 eingehalten wird, so dass Vertikalschwingungen der Anordnung nicht dazu führen, dass das Oberwerkzeug 11 oder das Werkstück 15 in das Schutzfeld 27 hineinragt und dadurch eine Fehlabschaltung auslöst.

Die Auswahl der aktivierten und deaktivierten Empfangselemente der Empfangseinrichtung 23 kann auch hier insbesondere so getroffen werden, dass das Schutzfeld 27 bezüglich des Oberwerkzeugs 11 und des Werkstücks 15 symmetrisch angeordnet ist. Dies ist jedoch nicht zwingend erforderlich.

Aus Fig. 2d ist außerdem ersichtlich, dass der Vertikalabstand A1+B 1 zwischen dem Oberwerkzeug 11 und dem Schutzfeld 27 genau dem Vertikalabstand wie zu Beginn der Arbeitsbewegung gemäß Fig. 2a entspricht. Auch dies ist jedoch nicht zwingend erforderlich.

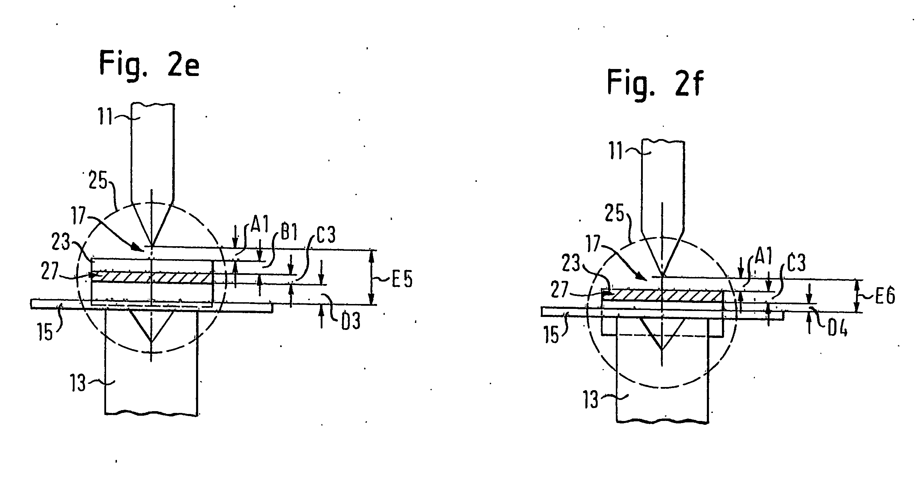

Fig. 2e zeigt den somit erreichten Zustand, wobei die Vertikalausdehnung des Schutzfelds 27 nun einen vorbestimmten Wert C3 angenommen hat (beispielsweise 2 mm). Nach Erreichen dieses Werts wird die Vertikalausdehnung C3 des Schutzfelds 27 während der weiterhin andauernden Arbeitsbewegung des Oberwerkzeugs 11 beibehalten, und das Schutzfeld 27 wird weiterhin in der Mitte des Öffnungsspalts 17 gehalten.

Zu Fig. 2e ist noch anzumerken, dass als Auslösekriterium für das erläuterte nachfolgende Beibehalten der Schutzfeldausdehning beispielsweise auch vorgesehen sein kann, dass ein vorbestimmter Vertikalabstand D3 zwischen dem Schutzfeld 27 und dem Werkstück 15 erreicht worden ist, oder dass eine vorbestimmte Vertikalausdehnung E5 des Öffnungsspalts erreicht worden ist.

Ferner ist zu Fig. 2e noch anzumerken, dass in dem darin gezeigten Zustand der Vertikalabstand D3 zwischen dem Schutzfeld 27 und dem Werkstück 15 genau dem Vertikalabstand A1+B1 zwischen dem Schutzfeld 27 und dem Oberwerkzeug 11 entspricht (beispielsweise 7 mm). Das Schutzfeld 27 ist somit genau symmetrisch zwischen dem Werkstück 15 und dem Oberwerkzeug 11 angeordnet. Dies ist jedoch nicht zwingend erforderlich. Eine mittige Anordnung mit Mindestabständen zu dem Werkstück 15 und dem Oberwerkzeug 11 genügt, um eine ausreichende Sicherungsfunktion zu erfüllen und die erläuterte Unempfindlichkeit gegenüber Vertikalschwingungen zu gewährleisten.

Fig. 2f zeigt den Zustand, nachdem bei weiterhin andauernder Arbeitsbewegung des Oberwerkzeugs 11 die Vertikalausdehnung C3 des Schutzfelds 27 - wie erläutert - beibehalten worden ist und das Schutzfeld 27 in der Mitte des Öffnungsspalts 17 gehalten worden ist. Außerdem ist bei dem Zustand gemäß Fig. 2f ein weiteres Auslösekriterium erreicht: Der Vertikalabstand D4 zwischen dem Schutzfeld 27 und dem Werkstück 15 nimmt nun einen vorbestimmten Wert an. Aufgrund des Erreichens dieses Auslösekriteriums wird nun der Sensor vollständig deaktiviert. Der Lichtstrahl 25 kann also beliebig unterbrochen werden, ohne dass hierdurch ein Abschaltvorgang ausgelöst wird.

Alternativ kann als Auslösekriterium beispielsweise auch vorgesehen sein, dass eine vorbestimmte Vertikalausdehnung E6 des Öffnungsspalts 17 erreicht worden ist.

Ferner ist aus Fig. 2f ersichtlich, dass während des Übergangs vom Zustand gemäß Fig. 2e zu dem Zustand gemäß Fig. 2f das Schutzfeld 27 entlang der Empfangseinrichtung 23 vertikal nach oben bewegt worden ist, so dass das Schutzfeld 27 hierdurch in der Mitte des Öffnungsspalts 17 gehalten worden ist. In dem in Fig. 2f gezeigten Zustand ist das Schutzfeld 27 vorzugsweise genau symmetrisch zwischen dem Oberwerkzeug 11 und dem Werkstück 15 angeordnet, beispielsweise mit einem jeweiligen Abstand A1 bzw. D4 von 2 mm, wobei die Vertikalausdehnung C3 des Schutzfelds 27 ebenfalls 2 mm betragen kann.

Das erläuterte Sicherungsverfahren und die entsprechende Konfigurierung des Sensors haben den Vorteil, dass der Öffnungsspalt 17 zwischen dem Oberwerkzeug 11 und dem zu bearbeitenden Werkstück 15 in jeder der in Fig. 2a bis 2f gezeigten Schritte der Arbeitsbewegung durch ein mittiges Schutzfeld 27 solange geschützt ist, bis das Schutzfeld 27 vollständig ausgeblendet werden kann, da aufgrund der geringen verbleibenden Spaltausdehnung E6 eine Verletzungsgefahr nun auch ohne Überwachung ausgeschlossen ist. In jeder Phase - auch unmittelbar vor dem endgültigen Deaktivieren des Sensors - wird also ein Schutzfeld 27 mit einer minimalen Vertikalausdehnung C überwacht, so dass im Falle eines unbefugten Eingriffs durch die Bedienperson noch ein Abschaltvorgang ausgelöst werden kann.

Außerdem ist in jeder gezeigten Phase eine mittige Anordnung des Schutzfelds 27 innerhalb des Öffnungsspalts 17 vorgesehen, mit einem jeweiligen Mindestabstand A1 und D4 zu dem Oberwerkzeug 11 bzw. dem Werkstück 15. Dadurch ist gewährleistet, dass Vertikalschwingungen des Oberwerkzeugs 11 und somit der Empfangseinrichtung 23 nicht zu einem unerwünschten Eingriff des Oberwerkzeugs 11 in das Schutzfeld 27 und somit zu einem Fehlabschalten der Werkzeugmaschine führen.

Ein weiterer Vorteil dieser Sicherung besteht darin, dass die Arbeitsbewegung des Oberwerkzeugs 11 bis zum Beginn der eigentlichen Bearbeitungsbewegung mit einer vergleichsweise hohen Schließgeschwindigkeit erfolgen kann, die der Schließgeschwindigkeit zu Beginn der Arbeitsbewegung (Fig. 2a) entspricht. Aufgrund der durchgängigen Sicherung bis zum endgültigen Deaktivieren des Sensors ist also ein Umschalten der Arbeitsbewegung von einer ersten Schließgeschwindigkeit zu einer nachfolgenden geringeren zweiten Schließgeschwindigkeit nicht zwingend erforderlich.

Allerdings ist es selbstverständlich möglich, eine derartige Unterteilung vorzusehen. In diesem Fall ist es bevorzugt, wenn der Zeitpunkt des Umschaltens zwischen der schnelleren und der langsameren Schließbewegung in Abhängigkeit von dem Bremsweg des Oberwerkzeugs 11 gewählt wird, und nicht in Abhängigkeit von dem so genannten Nachlaufweg. Der Bremsweg eines bewegten ersten Werkzeugteils ist nämlich erfahrensgemäß länger als der reine Nachlaufweg. Es ist daher ferner bevorzugt, wenn dieser Bremsweg vor den eigentlichen Arbeitsbewegungen des ersten Werkzeugsteils bzw. des Oberwerkzeugs 11 empirisch ermittelt wird.

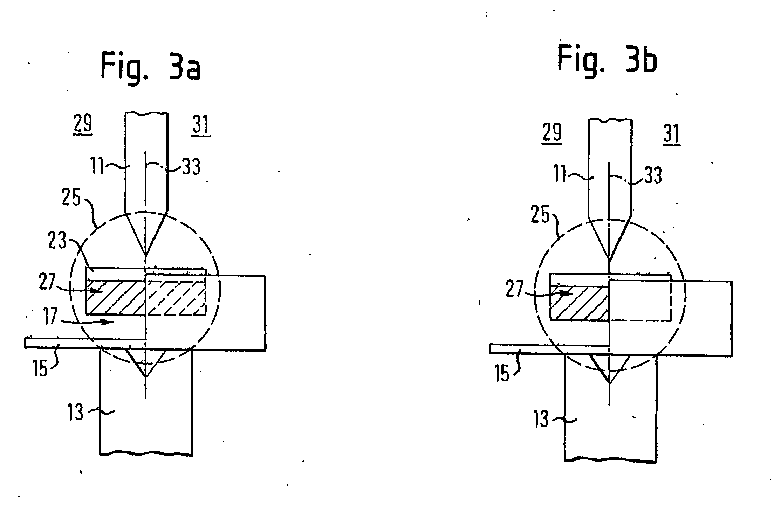

Fig. 3a bis 3c zeigen eine Weiterbildung des Sicherungsverfahrens gemäß Fig. 2a bis 2f, wobei gleiche Bezugszeichen dieselben Teile bezeichnen. Bei dieser Weiterbildung ist zusätzlich zu dem Normalmodus, wie er anhand der Fig. 2a bis 2f erläutert wurde, ein Kastenmodus für den Betrieb der Werkzeugmaschine vorgesehen. In diesem Kastenmodus löst eine Unterbrechung des Lichtstrahls 25 einen Abschaltvorgang nur dann aus, falls diese Unterbrechung bezüglich der Bewegungsebene 33 des Oberwerkzeugs 11 sowohl innerhalb eines Vorderraums 29, als auch eines Rückraums 31 erfolgt. Falls dagegen die Unterbrechung entweder nur in dem Vorderraum 29 oder nur in dem Rückraum 31 erfolgt, so wird dies von der Auswerte- und Steuereinrichtung des Sensors als befugter Eingriff in das Schutzfeld 27 angesehen, und die horizontale Ausdehnung des Schutzfelds 27 wird daraufhin auf den jeweils anderen Raumbereich 31 bzw. 29 verringert.

Fig. 3a zeigt die Lage des Oberwerkzeugs 11, des Lichtstrahls 25, der Empfangeinrichtung 23 und des Schutzfelds 27 entsprechend der Lage gemäß Fig. 2c. Als Werkstück 15 ist hier jedoch ein zu bearbeitender Kasten auf dem Unterwerkzeug 13 abgelegt. Der Kasten 15 greift innerhalb des Rückraums 31 in das Schutzfeld 27 ein. Dies soll jedoch ausnahmsweise nicht zum Auslösen eines Abschaltvorgangs führen. Stattdessen erkennt die Auswerte- und Steuereinrichtung des Sensors, dass es sich um einen erlaubten Eingriff durch ein Werkstück 15 handelt. Dementsprechend verringert sie die Ausdehnung des Schutzfelds 27 automatisch derart, dass das Schutzfeld 27 sich nur noch innerhalb des Vorderraums 29 erstreckt.

Fig. 3b zeigt in der Seitenansicht die vom Schutzfeld 27 nach diesem Umschalten eingenommene Erstreckung.

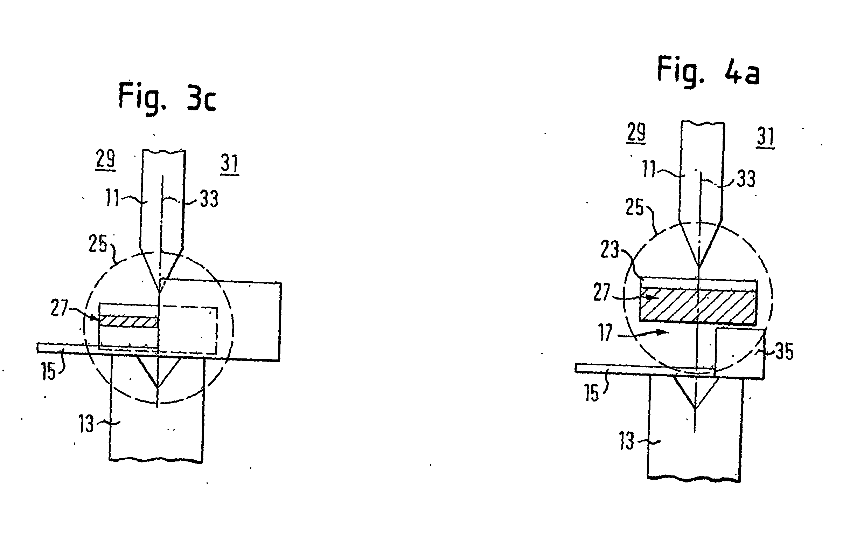

Die Steuerung der Vertikalausdehnung und der vertikalen Lage des Schutzfelds 27 erfolgt im Übrigen in gleicher Weise, wie anhand der Fig. 2a bis 2f erläutert. Fig. 3c entspricht beispielsweise dem Zustand gemäß Fig. 2e.

Der beschriebene Kastenmodus hat also den Vorteil, dass aufgrund des automatischen Erkennens eines zulässigen Eingriffs in das Schutzfeld 27 und der nachfolgenden entsprechenden Verringerung des Schutzfelds 27 eine durchgehend schnelle Bearbeitung auch von kastenförmigen Werkstücken 15 möglich ist. Die Geschwindigkeit der Arbeitsbewegung des Oberwerkzeugs 11 muss also nicht verringert werden. Dennoch bleibt die Sicherheit der Bedienperson in hinreichendem Maße gewährleistet.

Zu den Fig. 3a bis 3c ist noch anzumerken, dass die Auswerte- und Steuereinrichtung auch automatisch zu erkennen vermag, falls das kastenförmige Werkstück 15 sich im Vorderraum 29 befindet, so dass in diesem Fall der Rückraum 31 ausgeblendet werden kann.

Alternativ oder zusätzlich zu dem erläuterten Kastenmodus kann auch ein Anschlagmodus eingestellt werden, um einen zulässigen Eingriff eines Anschlagelements in das Schutzfeld 27 zu ermöglichen.

Fig. 4a bis 4c zeigen verschiedene Phasen der Sicherung der Werkzeugmaschine gemäß Fig. 1 in einem solchen Anschlagmodus, wobei gleiche Bezugszeichen wie in den Fig. 2a bis 2f und Fig. 3a bis 3c dieselben Teile bezeichnen.

Fig. 4a entspricht dem Zustand gemäß Fig. 2b. Hier ist ein Anschlagelement 35 zu erkennen, das als seitliche Stütze für das Werkstück 15 dient. Es ist ersichtlich, dass bei gewöhnlichem Verlauf des Sicherungsverfahrens das Anschlagelement 35 alsbald in das Schutzfeld 27 eingreifen und dadurch einen Abschaltvorgang auslösen würde.

Falls jedoch vor Beginn der Arbeitsbewegung des Oberwerkzeugs 11 von der Bedienperson der Anschlagmodus eingestellt worden ist, so wird das Schutzfeld 27 innerhalb eines Teils des Vorderraums 29 und/oder des Rückraums 31 ausgeblendet, so dass dort das Anschlagelement 35 den Lichtstrahl 25 unterbrechen darf, ohne einen Abschaltvorgang auszulösen.

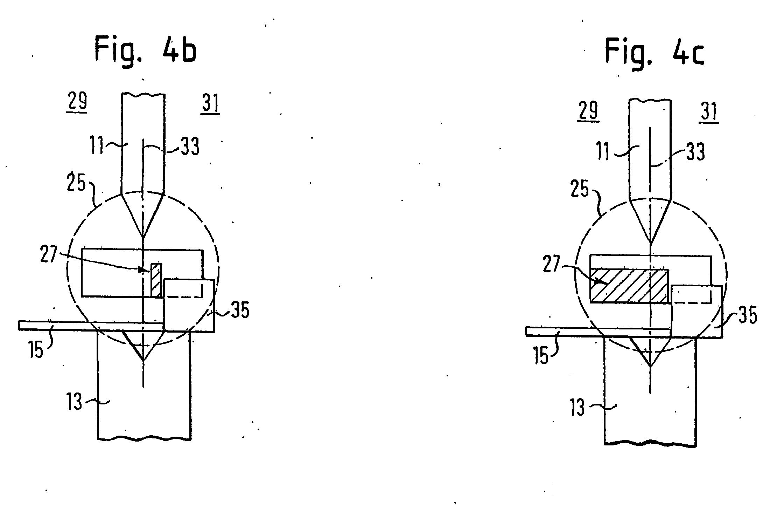

Fig. 4b zeigt beispielhaft eine Ausdehnung des Schutzfelds 27, die gegenüber der Ausdehnung gemäß Fig. 4a deutlich verringert ist. Da dieses Schutzfeld 27 gemäß Fig. 4b sich nahe und entlang der Bewegungsebene 33 des Oberwerkzeugs 11 erstreckt, ist eine Verletzungsgefahr für die Bedienperson weiterhin in hinreichendem Maße ausgeschlossen.

Fig. 4c zeigt beispielhaft eine andersartige Verringerung des Schutzfelds 27. Gegenüber der Ausdehnung des Schutzfelds 27 gemäß Fig. 4b erstreckt sich das Schutzfeld 27 hier auch entlang des Vorderraums 29.

### Bezugszeichenliste

- 11: Oberwerkzeug
- 13: Unterwerkzeug
- 15: Werkstück
- 17: Öffnungsspalt
- 19: Haltearm
- 21: Sendeeinrichtung
- 23: Empfangseinrichtung
- 25: Lichtstrahl
- 27: Schutzfeld
- 29: Vorderraum
- 31: Rückraum
- 33: Bewegungsebene des Oberwerkzeugs
- 35: Anschlagelement

- A: lichter Abstand zwischen dem Oberwerkzeug und der Empfangseinrichtung
- B: Vertikalausdehnung des oberen deaktivierten Bereichs der Empfangseinrichtung
- C: Vertikalausdehnung des Schutzfelds
- D: Vertikalabstand zwischen dem Schutzfeld und dem Werkstück
- E: Vertikalausdehnung des Öffnungsspalts

## Patentansprüche

1. Verfahren zur Sicherung einer Werkzeugmaschine mit einem ersten Werkzeugteil (11), das Arbeitsbewegungen in Richtung eines zweiten Werkzeugteils (13) ausführt, so dass im Verlauf dieser Arbeitsbewegungen ein Öffnungsspalt (17) zwischen dem ersten Werkzeugteil einerseits und dem zweiten Werkzeugteil oder einem zu bearbeitenden Werkstück (15) andererseits allmählich geschlossen wird,
wobei ein optoelektronischer Sensor ein volumenförmiges Schutzfeld (27) zwischen den Werkzeugteilen (11, 13) überwacht, indem wenigstens ein Lichtstrahl (25) mittels einer Sendeeinrichtung (21) entlang des Öffnungsspalts (17) ausgesandt und mittels einer Empfangseinrichtung (23) detektiert wird,
wobei ein Abschaltvorgang zum Anhalten des ersten Werkzeugteils (11) ausgelöst wird, wenn der Sensor eine Unterbrechung des wenigstens einen Lichtstrahls (25) detektiert, und
wobei:
- zu Beginn einer Arbeitsbewegung des ersten Werkzeugteils (11) die Schutzfeldausdehnung (C1) in Richtung der Arbeitsbewegung geringer ist als die Ausdehnung (E1) des Öffnungsspalts,
- das Schutzfeld (27) zunächst der Arbeitsbewegung des ersten Werkzeugteils (11) folgt, und
- bei andauernder Arbeitsbewegung die Schutzfeldausdehnung (C2) kontinuierlich verringert wird und das Schutzfeld (27) in der Mitte des Öffnungsspalts (17) gehalten wird,
**dadurch gekennzeichnet,**
**dass** danach bei weiterhin andauernder Arbeitsbewegung die Schutzfeldausdehnung (C3) beibehalten wird und das Schutzfeld (27) in der Mitte des Öffnungsspalts (17) gehalten wird, und
**dass** der Sensor schließlich deaktiviert wird.

2. Verfahren nach Anspruch 1,
**dadurch gekennzeichnet,**
**dass** zu Beginn der Arbeitsbewegung das Schutzfeld (27) derart innerhalb des Öffnungsspalts (17) angeordnet ist, dass das Schutzfeld zu dem ersten Werkzeugteil (11) einerseits und zu dem zweiten Werkzeugteil (13) oder einem zu bearbeitenden Werkstück (15) andererseits einen Mindestabstand (A1+B1 bzw. D1) einnimmt.

3. Verfahren nach einem der vorhergehenden Ansprüche,
**dadurch gekennzeichnet,**
**dass** das Schutzfeld (27), während es zunächst der Arbeitsbewegung des ersten Werkzeugteils (11) folgt, derart innerhalb des Öffnungsspalts (17) angeordnet ist, dass das Schutzfeld zu dem ersten Werkzeugteil (11) einerseits und zu dem zweiten Werkzeugteil (13) oder einem zu bearbeitenden Werkstück (15) andererseits stets einen Mindestabstand (A1+B1 bzw. D2) einnimmt.

4. Verfahren nach einem der vorhergehenden Ansprüche,
**dadurch gekennzeichnet,**
**dass** der Schritt des kontinuierlichen Verringerns der Schutzfeldausdehnung (C2) und des Haltens des Schutzfelds (27) in der Mitte des Öffnungsspalts (17) durchgeführt wird, nachdem
- ein vorbestimmter Abstand (D3) zwischen dem Schutzfeld (27) einerseits und dem zweiten Werkzeugteil oder einem zu bearbeitenden Werkstück (15) andererseits, oder
- eine vorbestimmte Ausdehnung (E3) des Öffnungsspalts (17) erreicht worden ist.

5. Verfahren nach einem der vorhergehenden Ansprüche,
**dadurch gekennzeichnet,**
**dass** während des Schritts des kontinuierlichen Verringerns der Schutzfeldausdehnung (C2) das Schutzfeld (27) derart in der Mitte zwischen den Werkzeugteilen (11, 13) gehalten wird, dass das Schutzfeld zu dem ersten Werkzeugteil (11) einerseits und zu dem zweiten Werkzeugteil oder einem zu bearbeitenden Werkstück (15) andererseits stets einen Mindestabstand (A1+B1 bzw. D3) einnimmt, insbesondere jeweils denselben Mindestabstand,
und/ oder
**dass** während des Schritts des kontinuierlichen Verringerns der Schutzfeldausdehnung (C2) der Abstand (D3) zwischen dem Schutzfeld (27) einerseits und dem zweiten Werkzeugteil oder einem zu bearbeitenden Werkstück (15) andererseits beibehalten wird.

6. Verfahren nach einem der vorhergehenden Ansprüche,
**dadurch gekennzeichnet,**
**dass** der Schritt des Beibehaltens der Schutzfeldausdehnung (C3) und des Haltens des Schutzfelds (27) in der Mitte des Öffnungsspalts (17) durchgeführt wird, nachdem
- eine vorbestimmte Schutzfeldausdehnung (C3) oder
- ein vorbestimmter Abstand (D3) zwischen dem Schutzfeld (27) einerseits und dem zweiten Werkzeugteil oder einem zu bearbeitenden Werkstück (15) andererseits, oder
- eine vorbestimmte Ausdehnung (E5) des Öffnungsspalts (17) erreicht worden ist.

7. Verfahren nach einem der vorhergehenden Ansprüche,
**dadurch gekennzeichnet,**
**dass** während des Schritts des Beibehaltens der Schutzfeldausdehnung (C3) das Schutzfeld (27) in symmetrischer Anordnung zwischen dem ersten Werkzeugteil (11) einerseits und dem zweiten Werkzeugteil oder einem zu bearbeitenden Werkstück (15) andererseits gehalten wird.

8. Verfahren nach einem der vorhergehenden Ansprüche,
**dadurch gekennzeichnet,**
**dass** der Schritts des Deaktivierens des Sensors durchgeführt wird, nachdem
- ein vorbestimmter Abstand (D4) zwischen dem Schutzfeld (27) einerseits und dem zweiten Werkzeugteil oder einem zu bearbeitenden Werkstück (15) andererseits, oder
- eine vorbestimmte Ausdehnung (E6) des Öffnungsspalts (17) erreicht worden ist.

9. Verfahren nach einem der vorhergehenden Ansprüche,
**dadurch gekennzeichnet,**
**dass** die Arbeitsbewegung des ersten Werkzeugteils (11) in eine erste Schließbewegung und eine nachfolgende langsamere zweite Schließbewegung unterteilt ist, wobei der Zeitpunkt des Umschaltens zwischen der ersten und der zweiten Schließbewegung in Abhängigkeit von dem Bremsweg des ersten Werkzeugteils gewählt wird.

10. Verfahren nach Anspruch 9,
**dadurch gekennzeichnet,**
**dass** der Bremsweg des ersten Werkzeugteils vor den Arbeitsbewegungen des ersten Werkzeugteils empirisch ermittelt wird.

11. Verfahren nach einem der vorhergehenden Ansprüche,
**dadurch gekennzeichnet,**
**dass** für den Betrieb der Werkzeugmaschine wahlweise ein Normalmodus oder ein Kastenmodus eingestellt wird,
wobei in dem Normalmodus das Schutzfeld (27) sich bezüglich der Bewegungsebene (33) des ersten Werkzeugteils (11) entlang eines Vorderraums (29) und eines Rückraums (31) erstreckt, und
wobei in dem Kastenmodus ein Unterbrechen des wenigstens einen Lichtstrahls (25) erst dann einen Abschaltvorgang auslöst, falls das Unterbrechen sowohl innerhalb des Vorderraums als auch des Rückraums bezüglich der Bewegungsebene des ersten Werkzeugteils erfolgt.

12. Verfahren nach einem der vorhergehenden Ansprüche,
**dadurch gekennzeichnet,**
**dass** für den Betrieb der Werkzeugmaschine wahlweise ein Normalmodus oder ein Anschlagmodus eingestellt wird,
wobei in dem Normalmodus das Schutzfeld (27) sich bezüglich der Bewegungsebene (33) des ersten Werkzeugteils (11) entlang eines Vorderraums (29) und eines Rückraums (31) erstreckt, und
wobei in dem Anschlagmodus das Schutzfeld innerhalb eines Teils des Vorderraums oder Rückraums ausgeblendet wird, so dass ein Werkstückanschlag (35) in den ausgeblendeten Teil eindringen kann, ohne dass ein hierdurch verursachtes Unterbrechen des wenigstens einen Lichtstrahls (25) einen Abschaltvorgang auslöst.

13. Verfahren nach einem der vorhergehenden Ansprüche,
**dadurch gekennzeichnet,**
**dass** das vom Sensor überwachte Schutzfeld (27) aus einem vom Sensor überwachbaren Beobachtungsfeld ausgewählt wird.

14. Verfahren nach einem der vorhergehenden Ansprüche,
**dadurch gekennzeichnet,**
**dass** der Sensor an dem ersten Werkzeugteil (11) fest montiert ist und während der Arbeitsbewegung mit dem ersten Werkzeugteil mitbewegt wird.

15. Verfahren nach einem der vorhergehenden Ansprüche,
**dadurch gekennzeichnet,**
**dass** die Empfangseinrichtung (23) des Sensors ortsauflösend ausgebildet ist, insbesondere als matrixförmiger CMOS-Empfänger.

16. Verfahren nach einem der vorhergehenden Ansprüche,
**dadurch gekennzeichnet,**
**dass** es sich bei der Werkzeugmaschine um eine Gesenkpresse handelt, wobei das erste Werkzeugteil (11) durch ein Oberwerkzeug gebildet ist, das vertikal nach unten gegen ein Unterwerkzeug (13) bewegt wird.

17. Optoelektronischer Sensor zur Sicherung einer Werkzeugmaschine mit einem ersten Werkzeugteil (11), das Arbeitsbewegungen in Richtung eines zweiten Werkzeugteils (13) ausführt, so dass im Verlauf dieser Arbeitsbewegungen ein Öffnungsspalt (17) zwischen dem ersten Werkzeugteil einerseits und dem zweiten Werkzeugteil oder einem zu bearbeitenden Werkstück (15) andererseits allmählich geschlossen wird,
wobei der Sensor zum Überwachen eines volumenförmigen Schutzfelds (27) zwischen den Werkzeugteilen (11, 13) eine Sendeeinrichtung (21) zum Aussenden wenigstens eines Lichtstrahls (25) entlang des Öffnungsspalts (17) und eine Empfangseinrichtung (23) zum Detektieren des wenigstens eines Lichtstrahls aufweist, und
wobei der Sensor ferner eine Auswerte- und Steuereinrichtung zum Auslösen eines Abschaltvorgangs aufweist, wenn der Sensor eine Unterbrechung des wenigstens einen Lichtstrahls (25) detektiert,
wobei der Sensor insbesondere zur Durchführung des Verfahrens nach einem der vorhergehenden Ansprüche ausgebildet ist, und
wobei der Sensor dergestalt konfiguriert ist, dass
- zu Beginn einer Arbeitsbewegung des ersten Werkzeugteils (11) die Schutzfeldausdehnung (C1) in Richtung der Arbeitsbewegung geringer ist als die Ausdehnung (E1) des Öffnungsspalts,
- das Schutzfeld (27) zunächst der Arbeitsbewegung des ersten Werkzeugteils (11) folgt, und
- bei andauernder Arbeitsbewegung die Schutzfeldausdehnung (C2) kontinuierlich verringert wird und das Schutzfeld (27) in der Mitte des Öffnungsspalts (17) gehalten wird,
**dadurch gekennzeichnet,**
**dass** danach bei weiterhin andauernder Arbeitsbewegung die Schutzfeldausdehnung (C3) beibehalten wird und das Schutzfeld (27) in der Mitte des Öffnungsspalts (17) gehalten wird, und
**dass** der Sensor schließlich deaktiviert wird.

## Claims

1. A method for ensuring the safety in use of a machine tool having a first tool part (11) carrying out working movements in the direction of a second tool part (13) so that, in the course of these working movements, an open gap (17) between the first tool part, on the one hand, and the second tool part or a workpiece, (15) to be machined, on the other hand, is gradually closed,
wherein, an optoelectronic sensor monitors a three-dimensional protected field (27) between the tool parts (11, 13) in that at least one light ray (25) is transmitted along the open gap (17) by means of a transmitter device (21) and is detected by means of a receiver device (23),
wherein a switch-off process is triggered to stop the first tool part (11) when the sensor detects an interruption of the at least one light ray (25), and
wherein:
- at the start of a working movement of the first tool part (11), the extent (C1) of the protected field in the direction of the working movement is smaller than the extent (E1) of the open gap;
- the protected field (27) initially follows the working movement of the first tool (11) part; and
- on a continued working movement, the extent (C2) of the protected field is continuously reduced and the protected field (27) is held in the center of the open gap (17),
**characterized in that**, on a further continued working movement, the extent (C3) of the protected field is maintained and the protected field (27) is held in the center of the open gap (17); and **in that** the sensor is finally deactivated.

2. A method in accordance with claim 1, **characterized in that**, at the start of the working movement, the protected field (27) is arranged inside the open gap (17) such that the protected field adopts a minimum spacing (A1+B1 and D1 respectively) to the first tool part (11), on the one hand, and to the second tool part (13) or to a workpiece (15) to be machined, on the other hand.

3. A method in accordance with any one of the preceding claims, **characterized in that** the protected field (27) is arranged inside the open gap (17), while it initially follows the working movement of the first tool part (11), such that the protected field always adopts a minimum spacing (A1+B1 and D2 respectively) to the first tool part (11), on the one hand, and to the second tool part (13) or to a workpiece (15) to be machined, on the other hand.

4. A method in accordance with any one of the preceding claims, **characterized in that** the step of continuously reducing the extent (C2) of the protected field and holding the protected field (27) in the center of the open gap (17) is carried out after
- a pre-determined spacing (D3) has been reached between the protected field (27), on the one hand, and the second tool part or a workpiece (15) to be machined, on the other hand, or
- a pre-determined extent (E3) of the open gap (17) has been reached.

5. A method in accordance with any one of the preceding claims, **characterized in that**, during the step of continuously reducing the extent (C2) of the protected field, the protected field (27) is held in the center between the tool parts (11, 13), in such a way that the protected field adopts a minimum spacing (A1+B1 and D3 respectively) to the first tool part (11), on the one hand, and to the second tool part or to a workpiece (15) to be machined, on the other hand, and in particular always adopts the same minimum spacing in each case; and/or
**in that**, during the step of continuously reducing the protected field extent (C2), the spacing (D3) between the protected field (27), on the one hand, and the second tool part or a workpiece (15) to be machined, on the other hand, is maintained.

6. A method in accordance with any one of the preceding claims, **characterized in that** the step of maintaining the extent (C3) of the protected field and holding the protected field (27) in the center of the open gap (17) is carried out after
- a pre-determined extent (C3) of the protected field has been reached or
- a pre-determined spacing (D3) between the protected field (27), on the one hand, and the second tool part or a workpiece (15) to be machined, on the other hand has been reached, or
- a pre-determined extent (E5) of the open gap (17) has been reached.

7. A method in accordance with any one of the preceding claims, **characterized in that**, during the step of maintaining the extent (C3) of the protected field, the protected field (27) is held in a symmetrical arrangement between the first tool part (11), on the one hand, and the second tool part or a workpiece (15) to be machined, on the other hand.

8. A method in accordance with any one of the preceding claims, **characterized in that** the step of deactivating the sensor is carried out after
- a pre-determined spacing (D4) between the protected field (27), on the one hand, and the second tool part or a workpiece (15) to be machined, on the other hand has been reached, or
- a pre-determined extent (E6) of the open gap (17) has been reached.

9. A method in accordance with any one of the preceding claims, **characterized in that** the working movement of the first tool (11) is divided into a first closing movement and into a subsequent slower second closing movement, with the point in time of the switching between the first and the second closing movements being selected in dependence on the braking path of the first tool part.

10. A method in accordance with claim 9, **characterized in that** the braking path of the first tool part is determined empirically prior to the working movements of the first tool part.

11. A method in accordance with any one of the preceding claims, **characterized in that** a normal mode or a box mode is optionally selected for the operation of the machine tool,
wherein, in the normal mode, the protected field (27) extends along a front space (29) and a back space (31) with respect to the plane of movement (33) of the first tool part (11); and
wherein, in the box mode, an interruption of the at least one light ray (25) only triggers a switch-off process if the interruption takes place both inside the front space and inside the back space with respect to the plane of movement of the first tool part.

12. A method in accordance with any one of the preceding claims, **characterized in that** a normal mode or a stop mode is optionally selected for the operation of the machine tool,
wherein, in the normal mode, the protected field (27) extends along a front space (29) and a back space (31) with respect to the plane of movement (33) of the first tool part (11); and
wherein, in the stop mode, the protected field is muted inside a part of the front space or of the back space so that a tool stop (35) can intrude into the muted part without an interruption of the at least one light ray (25) caused thereby triggering a switch-off process.

13. A method in accordance with any one of the preceding claims, **characterized in that** the protected field (27) monitored by the sensor is selected from an observation field monitorable by the sensor.

14. A method in accordance with any one of the preceding claims, **characterized in that** the sensor is fixedly mounted to the first tool part (11) and is moved along with the first tool part during the working movement.

15. A method in accordance with any one of the preceding claims, **characterized in that** the receiver device (23) of the sensor is made to be spatially resolving, in particular as a matrix-like CMOS receiver.

16. A method in accordance with any one of the preceding claims, **characterized in that** the machine tool is a stamping press, wherein the first tool part (11) is formed by a top tool moved vertically downwardly toward a bottom tool (13).

17. An optoelectronic sensor for ensuring the safety in use of a machine tool having a first tool part (11) carrying out working movements in the direction of a second tool part (13) so that, in the course of these working movements, an open gap (17) between the first tool part, on the one hand, and the second tool part or a workpiece (15) to be machined, on the other hand, is gradually closed,
wherein the sensor has a transmitter device (21) for the transmission of at least one light ray (25) along the open gap (17) and a receiver device (23) for the detection of at least one light ray for the monitoring of a three-dimensional protected field (27) between the tool parts (11, 13); and
wherein the sensor furthermore has an evaluation and control device for the triggering of a switch-off process when the sensor detects an interruption of the at least one light ray (25);
wherein the sensor is in particular made to carry out the method in accordance with any one of the preceding claims; and
wherein the sensor is configured such that
- at the start of a working movement of the first tool part (11), the extent (C1) of the protected field in the direction of the working movement is smaller than the extent (E1) of the open gap,
- the protected field (27) initially follows the working movement of the first tool (11) part, and
- on a continued working movement, the extent (C2) of the protected field is continuously reduced and the protected field (27) is held in the center of the open gap (17),
**characterized in that**, on a further continued working movement, the extent (C3) of the protected field is maintained and the protected field (27) is held in the center of the open gap (17); and **in that** the sensor is finally deactivated.

## Revendications

1. Procédé de sécurisation d'une machine-outil comportant une première partie d'outil (11) exécutant des mouvements de travail dans la direction d'une seconde partie d'outil (13), de telle sorte que pendant le déroulement de ces mouvements de travail un intervalle d'ouverture (17) entre la première partie d'outil d'une part et la seconde partie d'outil ou une pièce à oeuvrer (15) d'autre part est fermé progressivement, un détecteur optoélectronique surveillant un champ de protection volumétrique (27) entre les parties d'outil (11, 13) du fait qu'au moins un rayon de lumière (25) est émis le long de l'intervalle d'ouverture (17) au moyen d'un dispositif émetteur (21) et est détecté au moyen d'un dispositif récepteur (23),
dans lequel une opération de coupure pour arrêter la première partie d'outil (11) est déclenchée lorsque le détecteur détecte une interruption dudit au moins un rayon de lumière (25), et
dans lequel
- au début d'un mouvement de travail de la première partie d'outil (11), l'extension du champ de protection (C1) dans la direction du mouvement de travail est inférieure à l'extension (E1) de l'intervalle d'ouverture,
- le champ de protection (27) suit tout d'abord le mouvement de travail de la première partie d'outil (11), et
- lors d'une poursuite du mouvement de travail, l'extension du champ de protection (C2) est réduite en continu et le champ de protection (27) est maintenu au milieu de l'intervalle d'ouverture (17),
**caractérisé en ce que**
ensuite, lors d'une autre poursuite du mouvement de travail, l'extension du champ de protection (C3) est maintenue et le champ de protection (27) est maintenu au milieu de l'intervalle d'ouverture (17),
et **en ce que** le détecteur est finalement désactivé.

2. Procédé selon la revendication 1,
**caractérisé en ce que**
au début du mouvement de travail le champ de protection (27) est agencé de telle sorte à l'intérieur de l'intervalle d'ouverture (17) que le champ de protection prend une distance minimale (A1 + B1 ou D1) par rapport à la première partie d'outil (11) d'une part et par rapport à la seconde partie d'outil (13) ou à une pièce à oeuvrer (15) d'autre part.

3. Procédé selon l'une des revendications précédentes,
**caractérisé en ce que**
le champ de protection (27) est agencé de telle sorte à l'intérieur de l'intervalle d'ouverture (17), en suivant tout d'abord le mouvement de travail de la première partie d'outil (11), que le champ de protection prend toujours une distance minimale (A1 + B 1 ou D2) par rapport à la première partie d'outil (11) d'une part et par rapport à la seconde partie d'outil (13) ou à une pièce à oeuvrer (15) d'autre part.

4. Procédé selon l'une des revendications précédentes,
**caractérisé en ce que**
l'étape de la réduction continue de l'extension du champ de protection (C2) et du maintien du champ de protection (27) au milieu de l'intervalle d'ouverture (17) est mise en oeuvre une fois que
- une distance prédéterminée (D3) entre le champ de protection (27) d'une part et la seconde partie d'outil ou une pièce à oeuvrer (15) d'autre part, ou
- une extension prédéterminée (E3) de l'intervalle d'ouverture (17) est atteinte.

5. Procédé selon l'une des revendications précédentes,
**caractérisé en ce que**
pendant l'étape de la réduction continue de l'extension du champ de protection (C2), le champ de protection (27) est maintenu au milieu entre les parties d'outil (11, 13) de telle sorte que le champ de protection prend toujours une distance minimale (A1 + B1 ou D3), en particulier la même distance minimale respective, par rapport à la première partie d'outil (11) d'une part et par rapport à la seconde partie d'outil (13) ou à une pièce à oeuvrer (15) d'autre part,
et/ou
pendant l'étape de la réduction continue de l'extension du champ de protection (C2) la distance (D3) entre le champ de protection (27) d'une part et la seconde partie d'outil ou une pièce à oeuvrer (15) d'autre part reste maintenue.

6. Procédé selon l'une des revendications précédentes,
**caractérisé en ce que**
l'étape du maintien de l'extension de champ de protection (C3) et du maintien du champ de protection (27) au milieu de l'intervalle d'ouverture (17) est mise en oeuvre une fois que
- une extension de champ de protection prédéterminée (C3) ou
- une distance prédéterminée (D3) entre le champ de protection (27) d'une part et la seconde partie d'outil ou une pièce à oeuvrer (15) d'autre part, ou
- une extension prédéterminée (E5) de l'intervalle d'ouverture (17) est atteinte.

7. Procédé selon l'une des revendications précédentes,
**caractérisé en ce que**
pendant l'étape du maintien de l'extension de champ de protection (C3), le champ de protection (27) est maintenu en agencement symétrique entre la première partie d'outil (11) d'une part et la seconde partie d'outil ou une pièce à oeuvrer (15) d'autre part.

8. Procédé selon l'une des revendications précédentes,
**caractérisé en ce que**
l'étape de désactivation du détecteur est mise en oeuvre une fois que
- une distance prédéterminée (D4) entre le champ de protection (27) d'une part et la seconde partie d'outil ou une pièce à oeuvrer (15) d'autre part ou
- une extension prédéterminée (E6) de l'intervalle d'ouverture (17) est atteinte.

9. Procédé selon l'une des revendications précédentes,
**caractérisé en ce que**
le mouvement de travail de la première partie d'outil (11) est subdivisé en un premier mouvement de fermeture et en un second mouvement de fermeture successif plus lent, l'instant de la commutation entre le premier et le second mouvement de fermeture étant choisi en fonction du trajet de freinage de la première partie d'outil.

10. Procédé selon la revendication 9,
**caractérisé en ce que**
le trajet de freinage de la première partie d'outil est déterminé par voie empirique avant les mouvements de travail de la première partie d'outil.

11. Procédé selon l'une des revendications précédentes,
**caractérisé en ce que**
pour le fonctionnement de la machine-outil, on établit au choix un mode normal ou un mode en caisson,
dans lequel, pendant le mode normal, le champ de protection (27) s'étend le long d'un espace antérieur (29) et d'un espace postérieur (31) par rapport au plan de mouvement (33) de la première partie d'outil (11), et
pendant le mode en caisson, une interruption dudit au moins un rayon de lumière (25) ne déclenche une opération de coupure que si l'interruption s'effectue aussi bien à l'intérieur de l'espace antérieur qu'à l'intérieur de l'espace postérieur par rapport au plan de mouvement de la première partie d'outil.

12. Procédé selon l'une des revendications précédentes,
**caractérisé en ce que**
pour le fonctionnement de la machine-outil, on établit au choix un mode normal ou un mode de butée,
dans lequel, pendant le mode normal, le champ de protection (27) s'étend le long d'un espace antérieur (29) et d'un espace postérieur (31) par rapport au plan de mouvement (33) de la première partie d'outil (11), et
pendant le mode de butée, le champ de protection est supprimé à l'intérieur d'une partie de l'espace antérieur ou de l'espace postérieur, de sorte qu'une butée de pièce (35) peut pénétrer dans la partie supprimée sans qu'une interruption ainsi causée dudit au moins un rayon de lumière (25) ne déclenche une opération de coupure.

13. Procédé selon l'une des revendications précédentes,
**caractérisé en ce que**
le champ de protection (27) surveillé par le détecteur est choisi parmi un champ d'observation susceptible d'être surveillé par le détecteur.

14. Procédé selon l'une des revendications précédentes,
**caractérisé en ce que**
le détecteur est fermement monté sur la première partie d'outil (11) et est déplacé avec la première partie d'outil pendant le mouvement de travail.

15. Procédé selon l'une des revendications précédentes,
**caractérisé en ce que**
le dispositif récepteur (23) du détecteur est réalisé à résolution locale, en particulier sous la forme d'un récepteur CMOS en forme de matrice.

16. Procédé selon l'une des revendications précédentes,
**caractérisé en ce que**
la machine-outil est une presse à estamper, la première partie d'outil (11) étant formée par un outil supérieur qui est déplacé verticalement vers le bas contre un outil inférieur (13).

17. Détecteur optoélectronique de sécurisation d'une machine-outil comportant une première partie d'outil (11) exécutant des mouvements de travail dans la direction d'une seconde partie d'outil (13), de telle sorte que pendant le déroulement de ces mouvements de travail un intervalle d'ouverture (17) entre la première partie d'outil d'une part et la seconde partie d'outil ou une pièce à oeuvrer (15) d'autre part est fermé progressivement,
le détecteur optoélectronique comprenant, en vue de surveiller un champ de protection volumétrique (27) entre les parties d'outil (11, 13), un dispositif émetteur (21) pour émettre au moins un rayon de lumière (25) le long de l'intervalle d'ouverture (17) et un dispositif récepteur (23) pour détecter ledit au moins un rayon de lumière, et
le détecteur comprenant en outre un dispositif d'évaluation et de commande pour déclencher une opération de coupure lorsque le détecteur détecte une interruption dudit au moins un rayon de lumière (25), et
le détecteur est réalisé en particulier pour mettre en oeuvre le procédé selon l'une des revendications précédentes, et le détecteur est configuré de telle sorte que
- au début d'un mouvement de travail de la première partie d'outil (11), l'extension du champ de protection (C1) dans la direction du mouvement de travail est inférieure à l'extension (E1) de l'intervalle d'ouverture,
- le champ de protection (27) suit tout d'abord le mouvement de travail de la première partie d'outil (11), et
- lors d'une poursuite du mouvement de travail, l'extension du champ de protection (C2) est réduite en continu et le champ de protection (27) est maintenu au milieu de l'intervalle d'ouverture (17),
**caractérisé en ce que**
ensuite, lors d'une autre poursuite du mouvement de travail, l'extension du champ de protection (C3) est maintenue et le champ de protection (27) est maintenu au milieu de l'intervalle d'ouverture (17), et **en ce que** le détecteur est finalement désactivé.
